# EUROPEAN PATENT APPLICATION

(11) **EP 4 657 053 A1**
(43) Date of publication of application: **03.12.2025**
(21) Application number: 25162540.6
(22) Date of filing: 10.03.2025
(51) Int. Cl.: G01N 23/223

(54) **SYSTEM AND METHOD FOR XRF INSPECTION**

(30) Priority: 28.05.2024 US 202463652304 P
(71) Applicant: Rigaku Semiconductor Instruments Ltd., 2306990 Migdal HaEmek (IL)
(72) Inventor: SHKLAR, Avishai, 2306990 Migdal HaEmek (IL); HALABI, Mahdi, 2306990 Migdal HaEmek (IL); HILDESHEIM, Ariel, 2306990 Migdal HaEmek (IL); BLOCH, Daniel Nir, 2306990 Migdal HaEmek (IL); TAKAHASHI, Hideaki, Tokyo, 3-28-22 (JP); BUFORD, Benjamin Wilson, Hillsboro, Oregon, 97123 (US)
(74) Representative: Vossius & Partner Patentanwälte Rechtsanwälte mbB

(57) **Abstract**

An XRF inspection system, and a respective method are presented. The system and method are directed at inspection of a sample. The system comprising at least one X-ray radiation source providing X-ray radiation of selected energy spectrum, an optical arrangement for focusing the X-ray radiation onto a selected inspection spot of the sample, and at least one detector configured for detection of radiation emitted from the sample and providing output data indicative of emission spectrum from the sample; wherein the output data comprises data indicative of L-line excitation fluorescent response of the sample.

## Description

### TECHNOLOGICAL FIELD

The present disclosure relates to systems and methods for sample inspection using X-ray fluorescence, and specifically relates to techniques for assessing composition of solder bumps in circuits.

### BACKGROUND

Typical electronic circuits and circuit boards include various arrangement of connection points. In certain circuit boards, such connection points include soldier bumps, often utilizing Ag/Sn (silver-tin) material combination. X-ray fluorescence (XRF) Bump inspection is a non-destructive testing technique used primarily in the electronics manufacturing industry to assess the quality and composition of solder bumps on circuit boards. This technique employs XRF technology to analyze the elemental composition of solder bumps, which are crucial for forming reliable electrical connections in devices such as smartphones and computers.

During the inspection, an X-ray source directs X-rays at selected locations of a sample, typically at the solder bumps. The interaction of the X-ray radiation with the elements in the bumps causes fluorescence, emitting secondary X-rays characteristic of the specific elements present in the region of the sample. By measuring the intensity and energies of the emitted X-ray radiation, the XRF system can determine the composition and thickness of the materials in each bump.

Typically, conventional XRF techniques utilize detection of K-line excitation and fluorescence for inspection of Ag/Sn bumps. This technique usually operates with excitation X-ray having energy around 50KeV for detection of fluorescent emission at energies around 25KeV.

X-Ray Fluorescence Analytical Background: X-Ray Fluorescence Phenomenon. (http://cais.uga.edu/wp-content/uploads/2019/01/XRF_Background.pdf) provides an overview of the basic principles behind XRF spectroscopy.

Imashuku, S. et al "Improvement of total reflection X-ray fluorescence spectrometer sensitivity by flowing nitrogen gas". Spectrochimia Acta Part B: Atomic Spectroscopy, volume 73, 75-78 (2012): Total-reflection X-ray fluorescence (TXRF) has achieved remarkable success with the advantages of simultaneous multi-element analysis capability, decreased background noise, no matrix effects, wide dynamic range, ease of operation, and potential of trace analysis. Simultaneous quantitative online analysis of trace heavy metals is urgently required by dynamic environmental monitoring and management, and TXRF has potential in this application domain. However, it calls for an online analysis scheme based on TXRF as well as a robust and rapid quantification method, which have not been well explored yet. Besides, spectral overlapping and background effects may lead to loss of accuracy or even faulty results during practical quantitative TXRF analysis. This paper proposes an intelligent, multi-element quantification method according to the established online TXRF analysis platform. In the intelligent quantification method, collected characteristic curves of all existing elements and a pre-estimated background curve in the whole spectrum scope are used to approximate the measured spectrum. A novel hybrid algorithm, PSO-RBFN-SA, is designed to solve the curve-fitting problem, with offline global optimization and fast online computing. Experimental results verify that simultaneous quantification of trace heavy metals, including Cr, Mn, Fe, Co, Ni, Cu and Zn, is realized on the online TXRF analysis platform, and both high measurement precision and computational efficiency are obtained.

Menzel, M. et al, "Total reflection x-ray fluorescence analysis of airborne silver nanoparticles from fabrics" Analytical Chemistry volume 86, 3053-3059 (2014): Ag nanoparticles (NPs) are usually applied to consumer products because of their antimicrobial properties, which are desired in fabrics for sportswear as well as cloth used for cleaning. Hazards to human health from airborne Ag NPs may occur when the NPs are inhaled. NPs are comparable in size to macromolecules and viruses and able to penetrate deep into the lungs, e.g., the alveoli, where they may cause damage to cells and tissue due to their large surface area. In this study, aerosols released form fabrics treated with Ag NPs were collected using a low pressure Berner impactor and analyzed with total reflection X-ray fluorescence (TXRF). We found that the Ag NPs are released primarily in the form of larger particles, mainly 0.13-2 µm, probably attached to fiber material. Using an electron micro probe, single particles could be identified. The detection of backscattered electrons suggests small spots on the particle consist of a heavier element, which most likely is Ag, although the signal in energy-dispersive X-ray spectroscopy (EDX) was below the lower limit of detection (LOD). To achieve LODs necessary for Ag determination, Ar peaks were eliminated by a nitrogen atmosphere provided by the "Picofox-box". This enables linear calibration and quantification of Ag. The LOD was calculated at 0.2 ng (2.0 ppb). Following the TXRF and scanning electron microscopy (SEM)/EDX analysis, the aerosol samples were dissolved in nitric acid and analyzed with ICPMS to successfully confirm the results obtained by the TXRF measurements.

### GENERAL DESCRIPTION

The conventional XRF techniques typically utilize detection and analysis of K-lines for material analysis of Ag/Sn bumps in electronic circuit boards. The excitation energy required for causing K-line fluorescent emission for these elements is relatively high and may typically be associated with the maximal energy of the X-ray sources used. Additionally, inspection of a sample using such high energies, being around 50KeV, may result in that the excitation beam penetrates lower layers or substrate of the sample, providing output data indicative of materials of the inspection system. Additionally, a number of photons emitted from the lower layers of the sample may reach the detector. Additionally, using high energies X-Rays can cause Compton scattering at energies corresponding to the K-lines of the elements being examined.

More specifically, in XRF measurements, an X-ray beam is used to excite the sample being analyzed. As indicated above, this excitation causes the sample to emit a characteristic X-ray radiation at different energies corresponding to the elements present in the sample. When the sample contains elements from Sulfur (S, Z=16) and above in the periodic table, the X-ray excitation may provide excitation of electrons from the inner shell providing K-line excitation, or excitation of electrons from the second innermost shell providing L-line excitation. Accordingly, K lines have higher energies than L lines, as the energy required to excite an electron from the inner shell is greater than the energy required to excite an electron from the outer shell.

Further, to optimally excite an element, the X-ray beam needs to have an energy approximately twice that of the characteristic fluorescent energy. For instance, to excite the K lines of Tin (Sn) having a characteristic emission energy of 25.196 KeV, the exciting X-ray beam typically needs an energy of about 50 KeV. Similarly, to excite the K lines of Silver (Ag) having a characteristic emission energy of 22.106 KeV, the exciting X-ray beam typically needs an energy of about 44 KeV.

Accordingly, the present disclosure provides an inspection system and an inspection method for inspection of a sample. The technique of the present disclosure is typically suitable for inspection of a sample having one or more solder bumps, often used in electronic circuit boards for soldering various elements to the board. Such solder bumps often include Silver (Ag) and Tin (Sn). Inspection of the solder bumps may be used for determining thickness of the bump and material composition thereof, allowing detection of mismatch between circuit design and its actual structure, and identifying manufacturing defects.

The system generally comprises at least one X-ray radiation source (X-ray tube) providing X-ray radiation of selected energy spectrum, an optical arrangement for focusing the X-ray radiation onto a selected inspection spot of the sample, and at least one detector configured for detection of radiation emitted from the sample and providing output data indicative of emission spectrum from the sample. According to the present disclosure, the output data comprises data indicative of L-line excitation fluorescent response of the sample. For example, for Sn, the Lα line is at 3.444 KeV, and for Ag the Lα line is at 2.984 KeV.

Typical X-ray sources used in inspection systems operate at voltages of up to 50 KV. Generally, to provide K-line excitation of Ag/Sn bumps, these X-ray sources often operate at their maximal energy output. One advantage of the technique of the present disclosure relates to the ability to operate the X-ray source at lower energy requirements for excitation of L lines. This makes the L lines more suitable for analysis under standard XRF operating conditions, ensuring better excitation. More specifically, energy of approximately 6.888 KV and 5.968 KV, respectively, is required to excite Lα lines of Sn and Ag indicated above.

Generally, the use of L-lines for the analysis of heavy elements may be possible and may allow for optimal excitation of the elements at relatively low voltages. However, simple inspection utilizing these energy lines may lead to inspection inaccuracies due to the possibility of overlap with characteristic lines of other elements. For example, the Lα line of silver (Ag) is at an energy of 2.984 keV, generally overlapping with the Kα line of argon (Ar) at 2.957 keV. As argon is naturally present in atmospheric air, inspection of a sample in atmospheric conditions may affects the resulting spectrum at these energies.

Accordingly, the present disclosure further provides for replacing atmospheric gas composition at the invention are with a selected inert gas composition. The selected inert gas composition is used to eliminate normal air, and typically to eliminate argon, from affecting the inspection results. To this end the system may comprise an inert gas source, e.g., gas tank and/or pump, configured to flow a selected inert gas composition to a region where the sample is located during inspection. The selected inert gas composition comprises one or more materials having energy levels that are not aligned with L-line peaks of the materials to be inspected, to thereby avoid from interfering with the inspection process. More specifically, in inspection of Ag/Sn bumps, having L-line energies detailed above, the selected inert gas composition may comprise molecular nitrogen (N₂) and/or Helium (He) being both chemically inert and having energy levels that are distant from the Ag and Sn L-line levels. For example, N₂ has a characteristic energy line at 0.392 keV, being sufficiently distance from the Lα lines of Ag and of Sn.

Typically, the selected gas composition is also selected to avoid any interaction with materials present on the wafer or the machine's structural materials. Additionally, the selected inert gas composition is selected so as not to require special detectors other than detectors used for detection of the L-line excitation. For example, the inspection system may comprise one or more (e.g., four) silicone drift detectors SDD.

In some embodiments, the inspection system may be operable within a closed casing. Prio and during an inspection operation, the system may provide the selected inert gas composition into the casing, providing over pressure conditions. This provides for eliminating, or at least significantly reducing any interfering materials such as Ar gas from the casing.

Thus, according to some embodiments, the present disclosure provides the following examples:
Example 1: An XRF inspection system for inspection of a sample, the system comprising at least one X-ray radiation source providing X-ray radiation of selected energy spectrum, an optical arrangement for focusing the X-ray radiation onto a selected inspection spot of the sample, and at least one detector configured for detection of radiation emitted from the sample and providing output data indicative of emission spectrum from the sample; wherein the output data comprises data indicative of L-line excitation fluorescent response of the sample.
Example 2: The XRF inspection system of example 1, further comprising an inert gas source configured for flowing a selected composition of inert gas in path of radiation between the at least one X-ray source, the sample and the at least one detector, to thereby eliminate interference associated with excitation of components of atmospheric composition.
Example 3: The XRF inspection system of example 2, further comprising a casing, wherein the inert gas source is configured to provide over pressurized inert gas thereby eliminating atmospheric gas composition from within the casing. In some examples, the inert gas is directed for eliminating argon gas, or other gasses from interacting with the X-ray beam in the system.
Example 4: The XRF inspection system of example 2 or 3, wherein the selected composition of inert gas is selected to devoid atmospheric conditions from interacting with X-ray radiation provided by the at least one X-ray source.
Example 5: The XRF inspection system of any one of examples 2 to 4, wherein the selected composition of inert gas consists of Nitrogen (N₂) and/or Helium (He).
Example 6: The XRF inspection system of any one of examples 1 to 5, wherein the at least one X-ray source is a polychromatic X-ray source providing a selected energy spectrum of radiation.
Example 7: The XRF inspection system of any one of examples 1 to 6, wherein the optical arrangement comprises a polycapillary arrangement for focusing X-ray radiation from the at least one X-ray source onto an illumination spot having a diameter in a range between 1 micrometer and 100 micrometers.
Example 8: The XRF inspection system of any one of examples 1 to 7, wherein the optical arrangement comprises a Fresnel lens arrangement for focusing X-ray radiation from the at least one X-ray source onto an illumination spot having a diameter in a range between 1 micrometer and 100 micrometers.
Example 9: The XRF inspection system of any one of examples 1 to 8, wherein the output data comprises data indicative of sample fluorescent emission at energies in a range between 0.054 KeV and 8 KeV.
Example 10: The XRF inspection system of any one of examples 1 to 9, wherein the output data comprises data indicative of sample fluorescent emission at energies in a range between 2.5 KeV and 3.2 KeV.
Example 11: The XRF inspection system of any one of examples 1 to 10, further comprising a sample stage adapted for holding the sample and for selectively translating the sample thereby enabling scanning of the sample for inspection.
Example 12: A method for inspection of solder bumps in a sample, the method comprising: directing at least one X-ray beam onto at least one illumination spot on the sample; collecting fluorescent X-ray emission from the sample and generating fluorescent emission data indicative of level and energy range of fluorescent emission; processing the fluorescent emission data and determining data on material levels within one or more solder bumps in accordance with emission peaks indicative of L-line excitation of materials in the sample.
Example 13: The method of example 12, further comprising providing a selected inert gas composition onto the sample during inspection to thereby reducing emission of X-ray from one or more components of atmospheric composition in the fluorescent emission data.
Example 14: The method of example 13, comprising inspecting the sample within a casing, and providing the selected inert gas composition at pressurized conditions within the casing thereby eliminating atmospheric gas composition from within the casing.
Example 15: The method of example 13 or 14, wherein the selected inert gas composition is selected to devoid gas atmospheric conditions from interacting with X-ray radiation provided by the at least one X-ray source.
Example 16: The method of any one of examples 13 to 15, wherein the selected inert gas composition consists of Nitrogen (N₂) and/or Helium (He).
Example 17: The method of any one of examples 12 to 16, wherein directing at least one X-ray beam comprises directing a polychromatic X-ray beam having a selected energy spectrum of radiation.
Example 18: The method of any one of examples 12 to 17, wherein directing at least one X-ray beam comprises directing the at least one X-ray beam through an optical arrangement comprising a polycapillary arrangement and focusing the at least one X-ray beam onto an illumination spot having a diameter in a range between 1 micrometer and 100 micrometers.
Example 19: The method of any one of examples 12 to 18, wherein the fluorescent emission data comprises data indicative of sample fluorescent emission at energies in a range between 0.054 KeV and 8 KeV.
Example 20: The method of any one of examples 12 to 19, wherein the fluorescent emission data comprises data indicative of sample fluorescent emission at energies in a range between 2.5 KeV and 3.2 KeV.
Example 21: The method of any one of examples 12 to 20, further comprising providing the sample on a sample stage adapted for holding the sample and selectively translating the sample to thereby scan at least one region of the sample.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
Fig. 1 schematically exemplifies an inspection system according to some embodiments of the present disclosure;
Fig. 2 illustrates energy states of an atom and exemplifies K excitation and L excitation lines;
Fig. 3 shows fluorescent response spectrum of materials in atmospheric conditions and under N₂ conditions; and
Fig. 4 exemplifies a method for inspection of a sample according to some embodiments of the present disclosure.

### DETAILED DESCRIPTION OF EMBODIMENTS

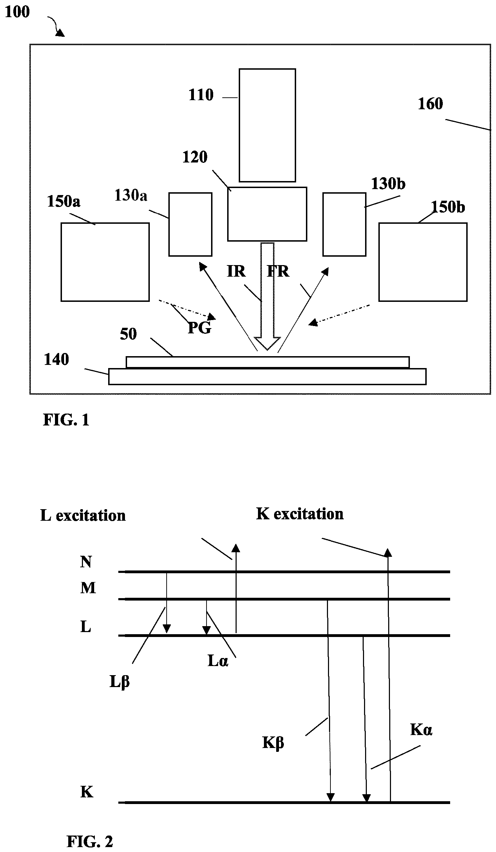

Reference is made to Fig. 1 exemplifying schematically a system 100 for inspection of a sample 50. The system 100 includes at least one X-ray source 110, an optical arrangement 120 (e.g., polycapillary arrangement) configures for focusing X-ray beam from the at least one X-ray source 110 onto a selected illumination spot on the sample 50, and one or more detectors 130, detectors 130a and 130b are exemplified.

Typically, system 100 may also include a sample mount 140 (e.g., stepper) configured for mounting a sample 50 and translating the sample in at least two dimensions, to enable scanning of the sample to inspect different location on the sample 50.

In some embodiments, the inspection system 100 may include a closed casing 160. Also, in some embodiments, the inspection system includes an inert gas purging arrangement 150 configured for flowing a selected inert gas composition PG into the casing. Two inert gas sources are exemplified 150a and 150b. The selected inert gas composition is selected to purge atmospheric gas to eliminate interference of one or more atmospheric gases from interaction with the X-ray radiation at energy levels close to one or more energies associated with inspection of the sample.

The technique and system of the present disclosure may be directed at inspection of one or more solder connection within an electric or electronic circuit board. Typically, such solder connections may be formed of silver-tin (Ag/Sn solder). The system of the present disclosure utilizes X-ray excitation by X-ray beam IR of one or more regions of the sample 50, collection of fluorescent response from the inspected location, and analysis of energy spectrum of the collected fluorescent response FR to determine material composition and structural parameters of the inspected regions. According to the present disclosure, the analysis of the fluorescent spectrum for detection and quantification of Ag/Sn solder regions utilizes spectral range associated with L-line excitation of the materials.

Fig. 2 generally illustrates energy levels of an atom and exemplifies K-line excitation and L-line excitation and respective fluorescent response. The X-ray beam excites material in the sample when it is absorbed by an electron of the innermost shell (K excitation), or the second innermost shell (L excitation) and causes the electron to be released, leaving a vacancy. In the fluorescent response an electron from a higher energy state relaxes into the vacancy releasing a photon of the corresponding energy difference.

As indicated above, the energy require for K excitation of silver (Ag) is about 44 KeV and the energy required for K excitation of tin (Sn) is about 50 KeV. These energies are often at the higher end of the spectrum of typical X-ray tubes used for inspection. Alternatively, L excitation of tin (Sn) requires energy of 6.888 KeV, and L excitation of silver (Ag) requires energy of 5.968 KeV. These lower energies are easier to achieve, eliminate interference associated with Compton scattering. Additionally, the X-ray beam of lower energies, in the range of 5-7 KeV may be characterized by lower penetration rate, thereby enabling inspection of the Ag/Sn bump while reducing background contributions and contribution of the materials matrix under the inspection area.

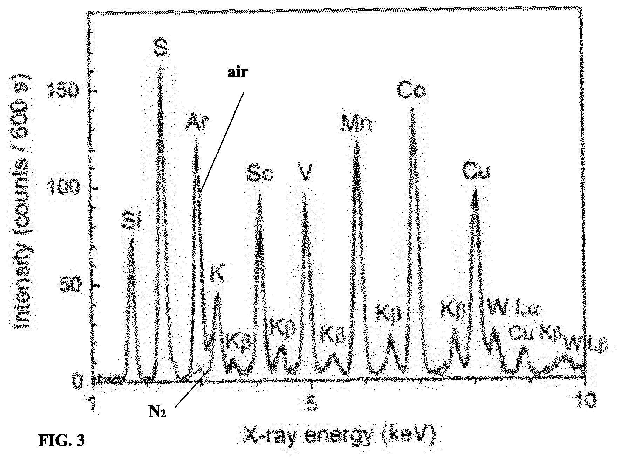

Detection of Ag/Sn bumps using L excitation may enable inspection with reduced X-ray energy and have various advantages over detection based on K excitation. However, the fluorescent data may include emission from additional elements at these energy ranges. More specifically, the Kα line of argon (Ar) at 2.957 keV. As argon is naturally present in atmospheric air, inspection of a sample in atmospheric conditions may affects the resulting spectrum at these energies. Fig. 3 (from Imashuku, et al. Spectrochim Acta Part B At Spectrosc 73, 75-78 (2012).) exemplifies fluorescence spectrum of various materials and shows the effect of XRF measurement in atmospheric conditions vs. when the atmospheric environment is replaced by nitrogen (N₂). As shown, argon (Ar) provides relatively high fluorescent response when present, while in nitrogen (N₂) environment, the Ar peak is reduced.

Accordingly, to eliminate, or at least significantly reduce environmental data interfering in collected fluorescent emission, system 100 may utilize an inert gas purging arrangement 150 as described above. The inert gas purging arrangement 150 (e.g., purging units 150a and 150b) may include a gas tank and release valve, or be connected to an external gas source, and configured to flow a selected inert gas composition at the inspection space prior and during inspection of a sample. The selected inert gas composition is selected to provide an inert gas mixture having X-ray fluorescent that is distant from L-line fluorescent response of material to be inspected such as silver and tin, while being chemically inert for interaction with the sample of system elements. Typically, the selected inert gas composition may include one or more of nitrogen (N₂) and/or helium (He).

To eliminate, or at least significantly reduce interference of atmospheric gas in the inspection data, the inert gas purging arrangement 150 may be operated to provide the selected inert gas composition at a selected flow rate to provide overpressure conditions. The inert gas flow provides for removing atmospheric air mixture, to reduce, or even eliminate fluorescent response associated with argon gas excitation.

In some embodiments, the inert gas purging arrangement may be connectable to an external gas source, e.g., via a wall mount. Such inert gas purging arrangement may include an arrangement of one or more of: a suitable connector, a valve, a flow meter, a particle filter, a gas purifier (e.g., for N₂ and/or He gas), and a release port.

To enable overpressure conditions of the selected inert gas composition, system 100 may be placed within a closed casing 160. The closed casing 160 need not be fully sealed, however typical gas flow through opening in the casing may determine the required flow rate providing overpressure conditions within the casing 160 and the time needed to sufficiently purge atmospheric mixture from the casing.

Typically, some inspection systems operate for scanning a sample and generate output data indicative of spectrum of fluorescent emission for each scan location on the sample. Accordingly, in some embodiments of the present disclosure, the inspection system 100 utilizes an inert gas purging arrangement 150 to provide inspection conditions enabling detection and analysis of Ag/Sn solder regions using L line fluorescent response, while eliminating, or at least significantly reducing interference from argon fluorescent response peaks. The output inspection data may than be examined and analyzed to determine composition and structural parameters of the sample including one or more Ag/Sn solder regions.

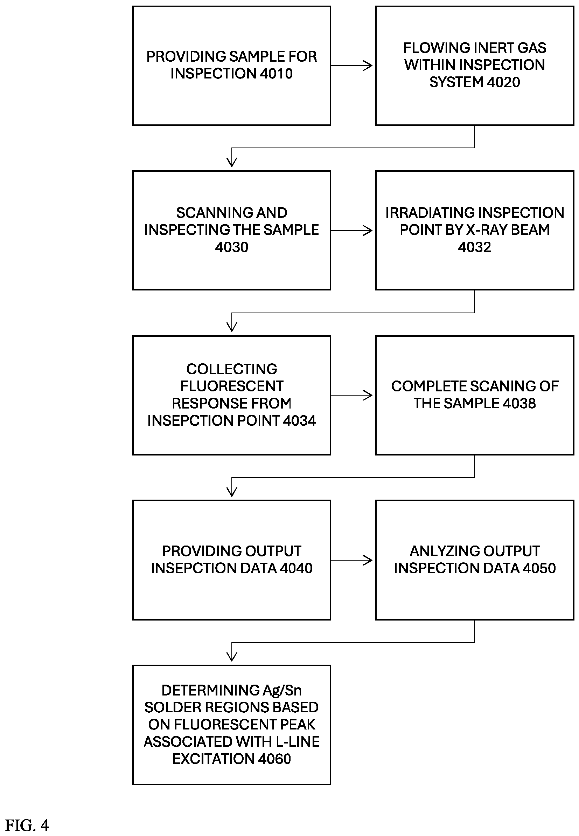

Further, according to some embodiments, the present disclosure provides a method for inspection of a sample. Fig. 4 exemplify a method for inspection of a system according to some embodiments of the present disclosure. Specifically, the method includes providing a sample for inspection 4010, and generally placing the sample on a sample mount within an inspection system. Generally, prior to inspection process, the present disclosure may include flowing a selected inert gas mixture 4020, e.g. nitrogen and/or helium gas, into the inspection system to purge out atmospheric gas mixture and eliminate, or at least significantly reduce, argon presence in the inspection system to avoid argon peak interfering in the inspection results. Following purge of atmospheric gas mixture, the method generally includes scanning and inspecting the sample by XRF inspection 4030. Scanning and inspecting the sample generally includes, for each scan point, the inspection may include irradiating the scan point with one or more X-ray beams 4032 (having selected polychromatic or monochromatic energy range) collecting fluorescent emission from the sample 4034 to generate output inspection data of the respective scan location. Generally, the actions of irradiating the scan point by one or more X-ray beams 4032 and collecting fluorescent emission data 4034 may occur simultaneously or almost simultaneously. Further, in some embodiments, the method may provide output data (action 4040) for each scan point immediately. The inspection process is performed until scanning of the sample is complete 4038, by scanning all selected regions of the sample.

The inspection output data typically includes data on spectrum and intensity of fluorescent emission for each scan point. The method includes providing the fluorescent data for analysis 4040, which may be done manually or using a computer software. In some embodiments, the method may utilize output of the fluorescent data for each scan point, rather than generating output data after completing the scan.

Additionally, in some embodiments, the method includes analyzing the output inspection data 4050 and determining Ag/Sn solder connectors based on fluorescent peaks associated with L-line excitation of the material of the sample 4060.

As indicated above, L-line excitation of silver provides a peak at an energy of 2.984 KeV and L-line excitation of tin provides a peak ay an energy of 3.444 KeV. These energy peaks enable reduced energy of the interrogating X-ray beam, where energy 6-10 KeV may be sufficient for L line excitation. Additionally, the lower energy of the X-ray beam is generally characterized by reduced penetration depth, reducing interference from substrate layers and the sample mount.

The inventors of the present disclosure have conducted experiments to determine the effect of the use of inert gas on detection of L-lines of Ag and/or Sn in a sample. The experimental data weas collected using an X-ray inspection system using a polychromatic tube with a W anode (e.g., manufactured by MXR). The tube was operated at 50 kV and 950 mA using a polycapillary arrangement with a focal spot of approximately 15 µm (e.g., manufactured by XOS). The inspection system further used an array of detectors manufactured by Amptek. The inspection system was modified to support the flow of N₂ gas onto the detection area to purge the measurement area and remove Ar.

Two sets of measurements were performed on 13 µm bumps, each consisting of 10 measurements of 60 seconds each. One set of measurements was conducted without the flow of N₂ to obtain a reference point, and the second set was conducted with the
flow of N₂ at a rate of 2.5 L/min. Table 1 below summarizes the ten results from the different sets of measurements.

**Table 1**

| | With N₂ flow | | | Without N₂ flow | | |
|---|---|---|---|---|---|---|
| | Ag (CPS) | Ar (CPS) | Sn (CPS) | Ag (CPS) | Ar (CPS) | Sn (CPS) |
| 1 | 202 | 128 | 20,916 | 212 | 276 | 20,305 |
| 2 | 204 | 124 | 20,861 | 220 | 271 | 20,315 |
| 3 | 216 | 118 | 20,884 | 215 | 279 | 20,316 |
| 4 | 208 | 129 | 20,879 | 216 | 278 | 20,339 |
| 5 | 212 | 123 | 20,882 | 225 | 272 | 20,324 |
| 6 | 211 | 129 | 20,913 | 220 | 271 | 20,310 |
| 7 | 219 | 122 | 20,908 | 221 | 276 | 20,306 |
| 8 | 210 | 122 | 20,919 | 212 | 279 | 20,311 |
| 9 | 208 | 122 | 20,900 | 208 | 284 | 20,317 |
| 10 | 211 | 118 | 20,916 | 205 | 280 | 20,325 |

From these results, the average, standard deviation, and RSD were calculated as shown in Table 2.

As can be seen from the results, the use of N₂ for purging undesired gas from the detection area enables reduced RSD by approximately 1.7%, in this example the RSD is reduced from 8.85 to 7.18. When examining the Ar signal, it can be seen that the signal decreases by 55%.

**Table 2**

| | With N₂ flow | | | Without N₂ flow | | |
|---|---|---|---|---|---|---|
| | Ag | Ar | Sn | Ag | Ar | Sn |
| Average (CPS) | 210 | 124 | 20,898 | 215 | 277 | 20,317 |
| Standard deviation (CPS) | 5.03 | 3.98 | 19.97 | 6.35 | 4.11 | 10.24 |
| RSD % at 3σ | 7.18 | N/A | 0.29 | 8.85 | N/A | 0.15 |

Accordingly, the present disclosure provides an inspection system and an inspection method, suitable for identifying one or more elements, typically Ag/Sn solder connectors, using L-line excitation of the elements of the sample. The system and method may utilize purging of air from the inspection region to eliminate, or at least significantly reduce contamination of the inspection data due to fluorescent peaks of environmental materials (such as argon) having energy peak that is close to L-line excitation peaks of the materials of the sample.

It is to be noted that the various features described in the various embodiments can be combined according to all possible technical combinations.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based can readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. An XRF inspection system for inspection of a sample, the system comprising at least one X-ray radiation source providing X-ray radiation of selected energy spectrum, an optical arrangement for focusing the X-ray radiation onto a selected inspection spot of the sample, and at least one detector configured for detection of radiation emitted from the sample and providing output data indicative of emission spectrum from the sample; wherein the output data comprises data indicative of L-line excitation fluorescent response of the sample.

2. The XRF inspection system of claim **1,** further comprising an inert gas source configured for flowing a selected composition of inert gas in path of radiation between the at least one X-ray source, the sample and the at least one detector, to thereby eliminate interference associated with excitation of components of atmospheric composition.

3. The XRF inspection system of claim **2,** further comprising a casing, wherein the inert gas source is configured to provide over pressurized inert gas thereby eliminating atmospheric gas composition from within the casing.

4. The XRF inspection system of claim **2 or 3**, wherein the selected composition of inert gas is selected to devoid atmospheric conditions from interacting with X-ray radiation provided by the at least one X-ray source.

5. The XRF inspection system of any one of claims **2 to 4,** wherein the selected composition of inert gas consists of Nitrogen (N₂) and/or Helium (He).

6. The XRF inspection system of any one of claims **1 to 5,** wherein the at least one X-ray source is a polychromatic X-ray source providing a selected energy spectrum of radiation.

7. The XRF inspection system of any one of claims **1 to 6,** wherein the optical arrangement comprises a polycapillary arrangement for focusing X-ray radiation from the at least one X-ray source onto an illumination spot having a diameter in a range between 1 micrometer and 100 micrometers.

8. The XRF inspection system of any one of claim **1 to 7,** wherein the output data comprises data indicative of sample fluorescent emission at energies in a range between 0.054 KeV and 8 KeV.

9. A method for inspection of solder bumps in a sample, the method comprising:
directing at least one X-ray beam onto at least one illumination spot on the sample;
collecting fluorescent X-ray emission from the sample and generating fluorescent emission data indicative of level and energy range of fluorescent emission;
processing the fluorescent emission data and determining data on material levels within one or more solder bumps in accordance with emission peaks indicative of L-line excitation of materials in the sample.

10. The method of claim **9,** further comprising providing a selected inert gas composition onto the sample during inspection to thereby reducing emission of X-ray from one or more components of atmospheric composition in the fluorescent emission data.

11. The method of claim **10,** comprising inspecting the sample within a casing, and providing the selected inert gas composition at pressurized conditions within the casing thereby eliminating atmospheric gas composition from within the casing.

12. The method of claim **10 or 11,** wherein the selected inert gas composition is selected to devoid gas atmospheric conditions from interacting with X-ray radiation provided by the at least one X-ray source.

13. The method of any one of claims **10 to 12,** wherein the selected inert gas composition consists of Nitrogen (N₂) and/or Helium (He).

14. The method of any one of claim **9 to 13,** wherein directing at least one X-ray beam comprises directing a polychromatic X-ray beam having a selected energy spectrum of radiation.

15. The method of any one of claims **9 to 14,** wherein the fluorescent emission data comprises data indicative of sample fluorescent emission at energies in a range between **0.5** KeV and **8** KeV.
